(19) Europäisches Patentamt
European Patent Office
Office européen des brevets

(11) Veröffentlichungsnummer: **0 270 889 B1**

# (12) EUROPÄISCHE PATENTSCHRIFT

(45) Veröffentlichungstag der Patentschrift: **09.05.90**

(51) Int. Cl.⁵: **A01N 43/42**

(21) Anmeldenummer: **87117075.9**

(22) Anmeldetag: **19.11.87**

(54) **Verwendung von 7-Chlorchinolin-8-carbonsäuren zur Beeinflussung der Entwicklung von Kulturpflanzen.**

(30) Priorität: **21.11.86 DE 3639837**

(43) Veröffentlichungstag der Anmeldung: **15.06.88 Patentblatt 88/24**

(45) Bekanntmachung des Hinweises auf die Patenterteilung: **09.05.90 Patentblatt 90/19**

(84) Benannte Vertragsstaaten: **BE CH DE ES FR GB GR IT LI NL**

(56) Entgegenhaltungen:
**EP-A- 0 060 429**
**EP-A- 0 104 389**

(73) Patentinhaber: **BASF Aktiengesellschaft, Carl-Bosch-Strasse 38, D-6700 Ludwigshafen(DE)**

(72) Erfinder: **Rosebrock, Henning, Sonnenwendstrasse 35, D-6702 Bad Duerkheim(DE)**
Erfinder: **Jung, Johann, Prof. Dr., Hardenburgstrasse 19, D-6703 Limburgerhof(DE)**
Erfinder: **Rademacher, Wilhelm, Dr., Austrasse 1, D-6703 Limburgerhof(DE)**
Erfinder: **Luib, Max, Dr., Schlangenthaler Weg 32a, D-6702 Bad Duerkheim(DE)**
Erfinder: **Fischer, Volker, Dr., Im Eichgarten 45, D-6701 Erpolzheim(DE)**
Erfinder: **Hagen, Helmut, Dr., Max-Slevogt-Strasse 17e, D-6710 Frankenthal(DE)**
Erfinder: **Kohler, Rolf-Dieter, Dr., Amselweg 3, D-6803 Edingen-Neckarhausen(DE)**
Erfinder: **Markert, Juergen, Dr., Am Speyerweg 26, D-6704 Mutterstadt(DE)**
Erfinder: **Watanabe, Akihide, Kamitsuchidana 1959 (8-8502), Ayase-Shi Kanagawa Pref. 252(JP)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vorliegende Erfindung betrifft die Verwendung von 7-Chlorchinolin-8-carbonsäuren zur Beeinflussung der Entwicklung von Kulturpflanzen.

7-Chlorchinolin-8-carbonsäuren sind aus EP-A-60 429 und EP-A-104 389 bekannt und dort als Herbizide empfohlen.

Es wurde gefunden, daß sich 7-Chlorchinolin-8-carbonsäuren

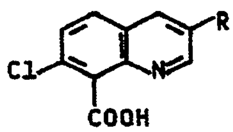

(I),

in der

R für Fluor, Chlor, Brom, $C_1$-$C_4$-Alkyl, $C_1$-$C_4$-Alkoxy oder $C_1$-$C_4$-Halogenalkyl steht,

zur Beeinflussung der Entwicklung von Kulturpflanzen eignen. Sie vermögen bei Anwendung in geringer Menge (subletaler Bereich) bei Kulturpflanzen bioregulatorische Effekte, z.B. Ertragssteigerung, hervorzurufen.

Im einzelnen hat der Substituent R in Formel I folgende Bedeutungen:

- Fluor, Chlor und Brom, bevorzugt Fluor und Chlor, besonders bevorzugt Chlor,

- unverzweigtes oder verzweigtes $C_1$-$C_4$-Alkyl, wie Methyl, Ethyl, n-Propyl, iso-Propyl, n-Butyl, iso-Butyl, sec.-Butyl und tert.-Butyl, bevorzugt $C_1$-$C_3$-Alkyl, wie Methyl, Ethyl und n-Propyl, besonders bevorzugt Methyl und Ethyl,

- unverzweigtes oder verzweigtes $C_1$-$C_4$-Alkoxy, wie Methoxy, Ethoxy, n-Propoxy, iso-Propoxy, n-Butoxy, iso-Butoxy, sec.-Butoxy und tert.-Butoxy, bevorzugt Methoxy und Ethoxy,

- unverzweigtes oder verzweigtes $C_1$-$C_4$-Halogenalkyl, bevorzugt $C_1$-$C_2$-Fluor-, Chlor- und Bromalkyl, besonders bevorzugt ein-, zwei- und dreifach durch Fluor, Chlor oder Brom subtituiertes Methyl, wie Fluor methyl, Difluormethyl, Trifluormethyl, Chlormethyl, Dichlormethyl, Trichlormethyl, Brommethyl, Dibrommethyl, Tribrommethyl, Chlorfluormethyl, Dichlorfluormethyl, Chlordifluormethyl, Bromfluormethyl, Dibromfluormethyl, Bromdifluormethyl, Bromchlormethyl, Chlordibrommethyl, Bromdichlormethyl und Bromchlorfluormethyl.

Insbesondere werden bioregulatorische Wirkungen mit 7-Chlorchinolin-8-carbonsäuren der Formel I erzielt, bei denen R die Bedeutung Chlor, Methyl oder Ethyl hat.

Die 7-Chlorchinolin-8-carbonsäuren der Formel I sind nach den in EP-A-60 429 und EP-A-104 389 beschriebenen Verfahren herstellbar.

Die 7-Chlorchinolin-8-carbonsäuren der Formel I können, in geringer Menge angewendet, praktisch alle Entwicklungsstadien einer Pflanze bioregulatorisch beeinflussen, ohne im Sinne des beabsichtigten Erfolges schädigend zu wirken.

Die Wirkungsvielfalt der Bioregulatoren hängt vor allem ab

a) von der Pflanzenart und -sorte,
b) von dem Zeitpunkt der Applikation, bezogen auf das Entwicklungsstadium der Pflanze und von der Jahreszeit,
c) von dem Applikationsort und -verfahren (Samenbeize, Knollenbehandlung, Wurzel- oder Blattapplikation, Behandlung einzelner Blüten oder Blütenstände, etc.),
d) von den geoklimatischen Faktoren, z.B. Lichtintensität, Tageslänge, Temperatur, Niederschlagsmenge,
e) von der Bodenbeschaffenheit (einschließlich Düngung),
f) von der Formulierung bzw. Anwendungsform des Wirkstoffs und
g) von den angewendeten Konzentrationen der aktiven Substanz.

Aus der Reihe der verschiedenartigen Anwendungsmöglichkeiten der 7-Chlor-chinolin-8-carbonsäuren werden einige nachstehend erwähnt:

A. Mit den Mitteln lassen sich Mehrerträge sowohl an Pflanzenteilen als auch an Pflanzeninhaltsstoffen erzielen. So ist es beispielsweise möglich, das Wachstum größerer Mengen an Knospen, Blüten, Blättern, Früchten, Samenkörnern, Wurzeln und Knollen zu induzieren.
Insbesondere bei Gemüse und Obst werden größere und wertvollere Früchte erzielt.

B. Mit den 7-Chlorchinolin-8-carbonsäuren gelingt es außerdem, die Ausbildung von Früchten auch in klimatisch ungünstigen Jahreszeiten zu sichern und zu beschleunigen.

C. Mit den 7-Chlorchinolin-8-carbonsäuren kann die Ausbildung parthenokarper Früchte induziert werden.

Ein besonders bevorzugtes Anwendungsgebiet ist die Ertragssteigerung z.B. bei Solanaceen, wie Auberginen, Tomaten, Kartoffeln und Paprika; bei Rosaceen, wie Pfirsichen, Mandeln, Äpfeln, Birnen und Erdbeeren; bei Fabaceen, wie Soja, Erbsen und verschiedenen Bohnenarten, und Malvaceen, wie Baumwolle und Okra.

Die erfindungsgemäß zu verwendenden Wirkstoffe können den Pflanzen mittels Saatgutbeizung oder über den Boden, d.h. durch die Wurzel zugeführt werden. Besonders bevorzugt ist die Spritzung der Blätter oder das gezielte Besprühen oder Eintauchen junger Fruchtstände.

Bei der Saatgutbehandlung werden im allgemeinen Wirkstoffmengen von 0,0001 bis 10 g je Kilogramm Saatgut, vorzugsweise 0,0001 bis 1 g, besonders bevorzugt 0,001 bis 0,1 g benötigt.

Bei Tauchbehandlungen (z.B. zur Bewurzelung von Stecklingen, bei der Applikation zu Pflanzkartoffeln bzw. zu Augenstecklingen von Kartoffeln oder bei der gezielten Behandlung einzelner Blüten oder Blütenstände) haben sich Wirkstoffkonzentrationen von 0,01 bis 500 ppm, bevorzugt von 0,1 bis 100 ppm, besonders bevorzugt von 0,1 bis 80 ppm als geeignet erwiesen.

Für die Blatt- und Bodenbehandlung werden im allgemeinen Gaben von nicht mehr als 0,001 g bis 500 g/ha, bevorzugt 0,01 bis 100 g/ha, besonders bevorzugt 0,1 bis 50 g/ha benötigt.

Die Verbindungen I können in Form üblicher Formulierungen angewendet werden wie Lösungen, Emulsionen, Suspensionen, Stäube, Pulver, Pasten und Granulate. Die Anwendungsformen richten sich ganz nach den Verwendungszwecken; sie sollen in jedem Fall eine feine und gleichmäßige Verteilung der wirksamen Substanz gewährleisten. Die Formulierungen werden in bekannter Weise hergestellt, z.B. durch Verdünnen des Wirkstoffs mit Lösungsmitteln und/oder Trägerstoffen, gegebenenfalls unter Verwendung von Emulgiermitteln und Dispergiermitteln, wobei im Falle der Benutzung von Wasser als Verdünnungsmittel auch andere organische Lösungsmittel zugesetzt werden können. Als Hilfsstoffe zur Formulierung kommen im wesentlichen in Frage Lösungsmittel wie Aromaten (z.B. Xylol, Toluol, Benzol), chlorierte Aromaten (z.B. Chlorbenzole), Paraffine (z.B. Erdölfraktionen), Alkohole (z.B. Methanol, Butanol), Amine (z.B. Ethanolamin), N,N-Dimethylformamid und Wasser; feste Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel oder sonstige oberflächenaktive Mittel, wie nichtionogene und anionische Emulgatoren (z.B. Polyoxyethylen-Fettalkohol-Ether, Alkylsulfonate) und Dispergiermittel wie Lignin, Sulfitablaugen und Methylcellulose. Bevorzugt ist die Anwendung der erfindungsgemäßen Verbindungen in wäßriger Lösung gegebenenfalls unter Zusatz von mit Wasser mischbaren organischen Lösungsmitteln wie Methanol oder anderen niederen Alkoholen, Aceton, N,N-Dimethylformamid oder N-Methylpyrrolidin. Die Formulierungen enthalten zwischen 0,01 und 95 Gew.%, vorzugsweise 0,05 bis 90 Gew.% Wirkstoff, besonders bevorzugt zwischen 0,05 und 20 Gew.% Wirkstoff.

Die Formulierungen bzw. die daraus hergestellten gebrauchsfertigen Zubereitungen wie Lösungen, Emulsionen, Suspensionen, Pulver, Stäube, Pasten oder Granulate werden in bekannter Weise angewendet, beispielsweise im Vorauflaufverfahren, im Nachauflaufverfahren oder als Beizmittel.

Beispiele für Formulierungen sind:

I 2 Gewichtsteile der Verbindung 1 werden in 3 Gewichtsteilen des Natriumsalzes der Diisobutylnaphthalin-sulfonsäure, 17 Gewichtsteilen des Natriumsalzes einer Ligninsulfonsäure aus einer Sulfitablauge und 78 Gewichtsteilen pulverförmigem Kieselsäuregel gut vermischt und in einer Hammermühle vermahlen. Durch feines Verteilen der Mischung in 20 000 Gewichtsteilen Wasser erhält man eine Spritzbrühe, die 0,01 Gew.% des Wirkstoffs enthält.

II 3 Gewichtsteile der Verbindung 1 werden mit 97 Gewichtsteilen feinteiligem Kaolin innig vermischt. Man erhält auf diese Weise ein Stäubemittel, das 3 Gew.% des Wirkstoffs enthält.

III 3 Gewichtsteile der Verbindung 2 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

IV 4 Gewichtsteile der Verbindung 1 werden mit 20 Teilen Natriumsalz eines Phenolsulfonsäure-harnstoff-formaldehyd-Kondensats, 4 Teilen Kieselgel und 72 Teilen Wasser innig vermischt. Man erhält eine stabile wäßrige Dispersion. Durch Verdünnen mit 100 000 Gewichtsteilen Wasser erhält man eine wäßrige Dispersion, die 0,004 Gew.% Wirkstoff enthält.

V 2 Teile der Verbindung 3 werden mit 2 Teilen Calciumsalz der Dodecylbenzolsulfonsäure, 8 Teilen Fettalkohol-polyglykolether, 2 Teilen Natriumsalz eines Phenolsulfonsäure-harnstoff-formaldehyd-Kondensats und 86 Teilen eines paraffinischen Mineralöls innig vermischt. Man erhält eine stabile ölige Dispersion.

VI Man vermischt 90 Gewichtsteile der Verbindung 2 mit 10 Gewichtsteilen N-Methyl-α-pyrrolidon und erhält eine Lösung, die zur Anwendung in Form kleinster Tropfen geeignet ist.

VII 0,2 Gewichtsteile der Verbindung 1 werden in einer Mischung gelöst, die aus 80 Gewichtsteilen Xylol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,0002 Gew.% des Wirkstoffs enthält.

VIII 0,1 Gewichtsteile der Verbindung 2 werden in einer Mischung gelöst, die aus 40 Gewichtsteilen Cyclohexanon, 30 Gewichtsteilen Isobutanol, 20 Gewichtsteilen des Anlagerungsprodukts von 7 Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,0001 Gew.% (1 ppm) des Wirkstoffs enthält.

IX 0,1 Gewichtsteile der Verbindung 1 werden in einer Mischung gelöst, die aus 25 Gewichtsteilen Cyclohexanol, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht. Durch Eingießen und feines Verteilen der Lösung in 10 000 Gewichtsteilen Wasser erhält man eine wäßrige Dispersion, die 0,001 Gew.% des Wirkstoffs enthält.

Die 7-Chlorchinolin-8-carbonsäuren bzw. die sie enthaltenden Mittel können zusammen mit anderen Wirkstoffen angewendet werden, z.B. mit Insektiziden, anderen Bioregulatoren und Fungiziden oder auch mit Düngemitteln vermischt. Beim Vermischen mit Bioregulatoren treten auch synergistische Effekte auf, d.h. die Wirksamkeit der Kombination kann größer sein als die Wirksamkeit der Einzelkomponenten in entsprechender Menge.

Anwendungsbeispiele

Im einzelnen wurden folgende Verbindungen I untersucht:

Verbindung Nr. 1: 3,7-Dichlorchinolin-8-carbonsäure
Verbindung Nr. 2: 7-Chlor-3-methylchinolin-8-carbonsäure und
Verbindung Nr. 3: 7-Chlor-3-ethylchinolin-8-carbonsäure.

Zum Vergleich wurden folgende bekannte Bioregulatoren herangezogen:

A: 4-(2-Methyl-4-chlorphenoxy)-buttersäure (MCPB, im Handelsprodukt MADEC enthalten);
B: Gibberellin $A_3$ ($GA_3$);
C: 4-Chlorphenoxyessigsäure (4-CPA, im Handelsprodukt TOMATOTONE enthalten).

Beispiel 1

Quantitative und qualitative Verbesserung der Fruchtausbildung bei Auberginen (einmalige Anwendung)

Auberginen der Sorte Kurokoma wurden unter Gewächshausbedingungen in Kunststoffgefäßen (30,5 x 27,0 cm) angezogen. Als Substrat diente Standarderde. Alle Pflanzen eines Versuches wurden nach Bedarf gleichmäßig gewässert und gedüngt.

Zu Beginn der Blüte wurden die Pflanzen einmal mit einer Zubereitung tropfnaß besprüht; die in der nachstehenden Tabelle 1 verwendeten Mengenangaben in ppm bedeuten die Konzentration des Mittels in einer wäßrigen Lösung. 1 ppm entspricht dabei einer Menge von 0,8 g Wirkstoff je Hektar.

Nach 50 Tagen wurde der Versuch ausgewertet. Es ergibt sich, daß durch die Verbindung Nr. 1 zwar die Anzahl der Früchte reduziert, gleichzeitig aber der gesamte Fruchtertrag und vor allem der Anteil von wertvollen Früchten mit einer Fruchtlänge von mehr als 12 cm und einem Einzelgewicht von mindestens 50 g deutlich verbessert wurde.

Konzentrationen von über 250 ppm brachten keine Verbesserung mehr. (Der angegebene Ertrag ist ein Mittelwert und bezieht sich auf jeweils 5 Pflanzen).

Tabelle 1

| Verbindung Nr. | Konzentration der Spritzbrühe (ppm) | Anzahl Früchte gesamt | Anzahl Früchte mehr als 50 g/Frucht | Fruchtgewicht (g) gesamt | Fruchtgewicht (g) mehr als 50 g/Frucht |
|---|---|---|---|---|---|
| Kontrolle | 0 | 58 | 0 | 250 | 0 |
| 1 | 10 | 16 | 14 | 1052 | 1018 |
| 1 | 50 | 19 | 15 | 1243 | 1229 |
| 1 | 250 | 18 | 10 | 834 | 681 |
| 1 | 750 | 17 | 7 | 844 | 679 |
| B | 50 | 42 | 4 | 462 | 309 |

Beispiel 2

Quantitative und qualitative Verbesserung der Fruchtausbildung bei Auberginen (zweimalige Anwendung)

Auberginen der Sorte Kurokoma wurden wie im Beispiel 1 beschrieben kultiviert.

Zu Beginn der Blüte und 66 Tage später wurden die Pflanzen mit Wirkstofflösung tropfnaß besprüht (1 ppm bedeutet 0,8 g Wirkstoff pro Hektar). 85 Tage nach der Blüte wurde der Versuch ausgewertet. Es ergibt sich, daß durch Anwendung der Verbindung Nr. 1 der Anteil an vermarktbaren Früchten mit einer Fruchtlänge von mehr als 12 cm und einem Einzelgewicht von mehr als 50 g deutlich gesteigert werden konnte. Im einzelnen wurden hier folgende Resultate erzielt (Erträge jeweils gemittelt und auf 5 Pflanzen bezogen).

Tabelle 2

| Verbindung Nr. | Konzentration der Spritzbrühe (ppm) | Anzahl Früchte gesamt | Anzahl Früchte mehr als 50 g/Frucht | Fruchtgewicht (g) gesamt | Fruchtgewicht (g) mehr als 50 g/Frucht |
|---|---|---|---|---|---|
| Kontrolle | 0 | 141 | 24 | 2073 | 1196 |
| 1 | 5 | 116 | 19 | 1831 | 1179 |
| 1 | 10 | 112 | 30 | 2040 | 1484 |
| 1 | 20 | 102 | 38 | 2501 | 2152 |
| 1 | 40 | 100 | 36 | 2393 | 2146 |
| A | 40 | 118 | 26 | 2104 | 1563 |

Beispiel 3

Quantitative und qualitative Verbesserung der Fruchtausbildung bei Auberginen (dreimalige Applikation)

Auberginen der Sorte Senryo wurden wie im Anwendungsbeispiel 1 beschrieben kultiviert. Die Pflanzen wurden dreimal jeweils tropfnaß besprüht (1 ppm bedeutet 1,25 g Wirkstoff pro Hektar).

Termin 1: 20 Tage nach der Verpflanzung der Setzlinge
Termin 2: 30 Tage nach der Verpflanzung der Setzlinge
Termin 3: 40 Tage nach der Verpflanzung der Setzlinge

42 Tage nach der ersten Behandlung wurde der Versuch ausgewertet. Dabei zeigte sich, daß die Anwendung der Verbindungen Nr. 1 und Nr. 2 (5 ppm und 10 ppm bzw. 5 ppm) zu einem deutlichen Mehrertrag führten. Dabei war insbesondere der Anteil an Früchten mit einem Einzelgewicht von mehr als 50 g größer als beim Vergleich. Die in der Tabelle 3 angegebenen Zahlen beziehen sich auf den Ertrag von jeweils 6 Pflanzen:

Tabelle 3

| Verbindung Nr. | Konzentration der Spritzbrühe (ppm) | Anzahl Früchte gesamt | Anzahl Früchte mehr als 50 g/Frucht | Fruchtgewicht (g) gesamt | Fruchtgewicht (g) mehr als 50 g/Frucht |
|---|---|---|---|---|---|
| Kontrolle | 0 | 32 | 9 | 971 | 550 |
| 1 | 5 | 21 | 14 | 1380 | 1109 |
| 1 | 10 | 27 | 13 | 1315 | 1013 |
| 1 | 20 | 20 | 13 | 1004 | 889 |
| 1 | 40 | 23 | 15 | 1214 | 1116 |
| 2 | 5 | 22 | 13 | 1230 | 957 |
| 2 | 20 | 32 | 14 | 1266 | 911 |
| 2 | 40 | 29 | 16 | 1361 | 1034 |
| A | 40 | 16 | 8 | 789 | 636 |

Beispiel 4

Quantitative und qualitative Verbesserung der Fruchtausbildung bei Tomaten (Behandlung des gesamten Sprosses)

Tomaten der Sorte Homare 114 wurden unter Gewächshausbedingungen in Kunststoffgefäßen (30,5 x 27,0 cm) angezogen. Als Substrat diente Standarderde. Alle Pflanzen eines Versuches wurden nach Bedarf gleichmäßig gewässert und gedüngt. Der allgemeinen Praxis entsprechend wurden Seitentriebe regelmäßig entfernt. Zum Zeitpunkt der Blüte des ersten Fruchststandes wurden die Pflanzen mit Wirkstofflösung tropfnaß besprüht. Dabei entspricht 1 ppm jeweils einer Menge von 1 g/ha. 75 Tage später wurde der Versuch ausgewertet. In diesem Versuch zeigte sich, daß durch eine Behandlung mit der Verbindung 1 die Anzahl der Früchte besonders an den jüngeren Blütenständen deutlich reduziert wurde. Die verbliebenen Früchte hatten jedoch ein wesentlich höheres Einzelgewicht und Gesamtgewicht als ohne Behandlung, was eine verbesserte Vermarktbarkeit erwarten läßt. Die in der Tabelle 4 angegebenen Zahlenwerte beziehen sich auf jeweils 5 Pflanzen.

Tabelle 4

| Verbindung Nr. | Konzentration der Spritzbrühe (ppm) | Anzahl Früchte (Stück) | Fruchtertrag (g) | mittleres Fruchtgewicht (g) |
|---|---|---|---|---|
| Kontrolle | 0 | 107 | 3797 | 35.5 |
| 1 | 1 | 88 | 4318 | 49.1 |
| 1 | 5 | 39 | 4605 | 118.1 |
| 1 | 10 | 39 | 4915 | 126.0 |

Beispiel 5

Quantitative und qualitative Verbesserung der Fruchtausbildung bei Tomaten (Behandlung der Fruchtstände)

Die Pflanzen wurden angezogen wie im Beispiel 4 beschrieben. Zum Zeitpunkt der Blüte des ersten Fruchtstandes wurden alle Fruchtstände tropfnaß mit Wirkstofflösungen besprüht (1 ppm entspricht dabei 0,1 g Wirkstoff/ha). 75 Tage später wurde der Versuch ausgewertet.

Im Gegensatz zur Behandlung der ganzen Pflanze (Beispiel 4) wurde die Anzahl der Früchte durch Behandlung mit der Verbindung Nr. 1 nur um ca. 25 bis 30 % verringert. Der Gesamtfruchtertrag war wiederum deutlich erhöht, wobei der Hauptanteil auf den ältesten Fruchtstand fiel. Außerdem wurde durch die Behandlung ein höheres Einzel-Fruchtgewicht erzielt.

Die in der Tabelle 5 angegebenen Ertragsmengen beziehen sich auf jeweils 5 Pflanzen.

Tabelle 5

| Verbindung Nr. | Konzentration der Spritzbrühe (ppm) | Anzahl Früchte (Stück) | Fruchtertrag (g) | mittleres Fruchtgewicht (g) |
|---|---|---|---|---|
| Kontrolle | – | 107 | 3797 | 35.5 |
| 1 | 10 | 82 | 4514 | 55.0 |
| 1 | 20 | 72 | 4571 | 63.5 |
| C | 20 | 97 | 3970 | 40.9 |

Beispiel 6

Verbesserung der Fruchtqualität von Tomaten

Tomaten der Sorte Curabel wurden zur üblichen Jahreszeit unter Feldbedingungen angebaut. Die Kultivation der Pflanzen erfolgte unter praxisgemäßen Bedingungen. Zum Zeitpunkt des Blühens einer Blütentraube wurden die Pflanzen mit einer wäßrigen Aufbereitung der erfindungsgemäßen Verbindungen bespüht (insgesamt fünf aufeinanderolgende Behandlungen).

Analog zu den Beispielen 4 und 5 ergab sich auch hier ein Mehrertrag unter dem Einfluß der erfindungsgemäßen Substanzen. Zusätzliche Untersuchungen zeigten, daß die erfindungsgemäßen Verbindungen zu einem Fruchtwachstum ohne Samenausbildung (Parthenokarpie) führen (Tabelle 6). Ferner ergab sich, daß das Fruchtmark unter dem Einfluß von z.B. den Verbindungen 1 und 2 deutlich fester ausgeprägt ist. Die genannten Effekte lassen somit eine Qualitätsverbesserung sowohl bei Gemüse- als auch bei Industrietomaten erwarten.

Tabelle 6*

| Verbindung Nr. | Aufwandmenge (g Wirkstoff/ha) | durchschnittliche Anzahl Samen pro Frucht |
|---|---|---|
| Kontrolle | 0 | 109 |
| 1 | 0.315 | 110 |
| 1 | 0.625 | 58 |
| 1 | 1.250 | 35 |
| 1 | 2.500 | 19 |
| 1 | 5.000 | 5 |
| 2 | 5.000 | 70 |
| C | 12.500 | 80 |

* pro Versuchsglied wurden 20 einheitlich große Früchte von je ca. 80 g Gewicht verwendet

Beispiel 7

Beschleunigung der Fruchtentwicklung bei Auberginen

Auberginen der Sorte Kurokoma wurden wie im Beispiel 1 angegeben kultiviert. Der Versuch wurde während des Herbstes und Winters durchgeführt, zu einer Jahreszeit also, in der die Produktion von Auberginenfrüchten als schwierig gilt. Die Aussaat der Pflanzen erfolgte am 27. September, die Behandlung am 25. Dezember durch Besprühen bis zur Tropfnässe (1 ppm entspricht 0,6 g Wirkstoff je Hektar).

Es zeigte sich, daß durch die Behandlung der Pflanzen mit der Verbindung 1 zwar die Anzahl der Blüten pro Pflanze reduziert wurde, daß aber die Fruchtentwicklung wesentlich beschleunigt wurde.

Tabelle 7

| Verbindung Nr. | Konzentration der Spritzbrühe (ppm) | Fruchtertrag pro Pflanze (g) | | | |
|---|---|---|---|---|---|
| | | am 24.01 | am 24.02 | am 10.02 | gesamt |
| Kontrolle | 0 | 0 | 0 | 0 | 0 |
| 1 | 10 | 94.2 | 81.7 | 27.6 | 203.5 |
| 1 | 50 | 124.0 | 66.0 | 43.7 | 233.7 |
| 1 | 250 | 97.5 | 8.8 | 29.8 | 136.1 |
| 1 | 750 | 93.2 | 33.1 | 9.4 | 135.7 |
| B | 50 | 15.8 | 45.9 | 0 | 61.7 |

Beispiel 8

Ertragssteigerung bei Baumwolle

Baumwolle der Sorte Delta Pine wurde feldmäßig in Greenville, Mississippi, USA, angebaut. Zum Zeitpunkt der Hauptblüte wurden Blüten und Knospen gezielt mit Wirkstofflösung besprüht.

Es zeigte sich, daß Verbindung 1 eine deutliche Ertragssteigerung hervorrief. Im einzelnen wurden folgenden Resultate erzielt:

Tabelle 8

| Verbindung Nr. | Aufwandmenge (g Wirkstoff/ha) | Ertrag (kg/ha) |
|---|---|---|
| Kontrolle | 0 | 2725 |
| 1 | 10 | 3018 |
| 1 | 30 | 3588 |
| 1 | 60 | 2997 |
| 1 | 80 | 3074 |

Beispiel 9

Quantitative und qualitative Verbesserung der Knollenausbildung bei Kartoffeln

Augenstecklinge von Kartoffeln (Sorte Kennebec) werden vor dem Auspflanzen ca. 10 Minuten in eine wäßrige Lösung der erfindungsgemäßen Wirkstoffe gelegt und anschließend ausgepflanzt. Die Kultivation der Kartoffelpflanzen erfolgte unter üblichen Bedingungen.

Es zeigte sich, daß durch eine Behandlung z.B. mit der Verbindung 2 sowohl der Gesamtertrag an Kartoffelknollen als auch der Anteil an vermarktbaren Knollen (Knollen mit einem Durchmesser von mehr als 8 cm) deutlich erhöht wird.

Die zugehörigen Ertragsdaten sind in Tabelle 9 angegeben und beziehen sich auf eine Parzellengröße von 13 $m^2$.

Tabelle 9

| Verbindung Nr. | Konzentration der Behandlungslösung (ppm) | Anzahl Kartoffelknollen | | Knollenertrag (kg) | |
|---|---|---|---|---|---|
| | | gesamt | vermarktbar | gesamt | vermarktbar |
| Kontrolle | 0 | 339 | 86 | 16.5 | 10.3 |
| 2 | 1 | 378 | 110 | 19.5 | 12.8 |
| 2 | 10 | 361 | 112 | 18.7 | 12.4 |

Beispiel 10

Verbesserung des Fruchtertrages bei Pfirsichen

3-jährige Pfirsichbäume (Sorten Red Haven und Elberta Queen) wurden zum Zeitpunkt der Blüte mit einer wäßrigen Aufbereitung der erfindungsgemäßen Substanzen behandelt (750 ml/Baum; tropfnaß). Die Kultivation der Pflanzen erfolgte unter üblichen Bedingungen. Ebenso wurden die Früchte zum üblichen Termin geerntet.

Wie aus den Tabellen 10a und 10b hervorgeht, wird durch die Behandlung mit den Wirkstoffen der Fruchtertrag gesteigert. Bei der Sorte Red Haven wird überdies der Fruchtansatz erhöht und die Fruchtreife beschleunigt, was in vielen Fällen erwünscht ist. Die Verbindung 2 führte bei der Sorte Elberta Queen zu einer Erhöhung der Fruchtgröße um ca. 10 %, was eine bessere Vermarktbarkeit erwarten läßt.

Die angegebenen Daten sind Durchschnittswerte und beziehen sich jeweils auf einen Baum.

Tabelle 10a: Sorte Red Haven

| Verbindung Nr. | Konzentration der Spritzlösung (ppm) | geerntete Früchte Anzahl | %unreif | %reif | durchschnittliches Fruchtgewicht (g) | Gesamtertrag (kg) |
|---|---|---|---|---|---|---|
| Kontrolle | 0 | 148.7 | 60 | 40 | 85 | 12.64 |
| 1 | 5 | 154.0 | 55 | 45 | 87 | 13.40 |
| 1 | 10 | 190.0 | 41 | 59 | 70 | 13.30 |
| 2 | 20 | 183.4 | 27 | 73 | 83 | 15.22 |

Tabelle 10b: Elberta Queen

| Verbindung Nr. | Konzentration der Spritzlösung (ppm) | geerntete Früchte Anzahl | %unreif | %reif | durchschnittliches Fruchtgewicht (g) | Gesamtertrag (kg) |
|---|---|---|---|---|---|---|
| Kontrolle | 0 | 47.0 | 23 | 77 | 125 | 5.88 |
| 1 | 5 | 69.0 | 28 | 72 | 124 | 8.56 |
| 1 | 10 | 53.3 | 26 | 74 | 125 | 6.66 |
| 2 | 20 | 43.7 | 15 | 85 | 136 | 5.94 |
| 2 | 20 | 47.0 | 28 | 72 | 140 | 6.58 |
| 2 | 40 | 57.0 | 25 | 75 | 138 | 7.83 |

Beispiel 11

Ertragssteigerung bei Erdbeeren (Tauchbehandlung von Setzlingen)

Der Wurzelbereich von Erdbeersetzlingen (Sorte Earliglow) wurde unmittelbar vor dem Auspflanzen in eine wäßrige Aufbereitung der erfindungsgemäßen Substanzen eingetaucht. Die weitere Anzucht der Pflanzen erfolgte unter praxisüblichen Feldbedingungen. Mit einsetzender Reifung wurden reife Früchte im Abstand von jeweils vier Tagen geerntet. Der üblichen Praxis entsprechend erfolgten insgesamt vier Beerntungen. Ein Einbringen der danach noch verbliebenen Früchte wäre nicht mehr rentabel gewesen.

Wie aus Tabelle 11 hervorgeht, wird durch eine derartige Behandlung ein insgesamt höherer Ertrag erzielt, der zur Hauptsache durch einen vermehrten Fruchtansatz bedingt ist. Vorteilhaft ist weiterhin, daß die Früchte von behandelten Pflanzen früher erntereif sind.

Die Angaben beziehen sich auf jeweils 25 Pflanzen aus einer Parzelle von 6,5 $m^2$.

Tabelle 11

| Verbindung Nr. | Konzentration der Behandlungslösung (pm) | 1. Erntetermin | | 2. Erntetermin | | 3. Erntetermin | | 4. Erntetermin | | Gesamtertrag | |
|---|---|---|---|---|---|---|---|---|---|---|---|
| | | Anzahl Früchte | Gewicht (g) | Anzahl Früchte | Gewicht (g) | Anzahl Früchte | Gewicht (g) | Anzahl Früchte | Gewicht (g) | Anzahl Früchte | Gewicht (g) |
| Kontrolle | 0 | 15.0 | 116.0 | 77.0 | 482.0 | 57.5 | 167.0 | 39.0 | 104.0 | 188.5 | 869.0 |
| 2 | 1 | 18.5 | 169.4 | 96.3 | 583.2 | 72.5 | 205.4 | 41.7 | 99.8 | 229.0 | 1057.8 |
| 2 | 10 | 23.3 | 196.0 | 95.5 | 554.3 | 55.2 | 173.7 | 36.7 | 104.0 | 210.7 | 1027.7 |

Beispiel 12

Ertragssteigerung bei Erdbeeren (Blattbehandlung)

Einjährige Erdbeerpflanzen der Sorte Earliglow (angebaut unter üblichen Feldbedingungen) wurden zum Zeitpunkt der Hauptblüte mit einer wäßrigen Aufbereitung der erfindungsgemäßen Verbindungen behandelt (375 l/ha). Wie aus Tabelle 12 hervorgeht, läßt sich durch eine derartige Behandlung der Fruchtertrag (Summe aller Einzelernten) deutlich steigern. Ebenso wie im Beispiel 11 wird auch hier die Ertragsmehrung primär durch einen verbesserten Fruchtansatz bedingt.

Die Angaben beziehen sich auf jeweils 10 Pflanzen.

Tabelle 12

| Verbindung Nr. | Aufwandmenge (g Wirkstoff/ha) | Gesamtertrag | |
|---|---|---|---|
| | | Anzahl | Gewicht (g) |
| Kontrolle | 0 | 70.8 | 335.0 |
| 1 | 0.125 | 72.9 | 345.1 |
| 1 | 0.250 | 82.1 | 395.3 |
| 1 | 0.500 | 76.5 | 368.5 |
| 2 | 0.125 | 72.9 | 351.8 |
| 2 | 0.250 | 74.3 | 361.8 |

Beispiel 13

Ertragssteigerung bei Soja

Sojapflanzen der Sorte Sertaneja und IAS 5 wurden unter praxisüblichen Bedingungen im Feld kultiviert. Die Pflanzen wurden mit einer wäßrigen Aufbereitung der erfindungsgemäßen Substanzen zum Zeitpunkt der einsetzenden Blüte besprüht. Wie aus Tabelle 13 hervorgeht, kann durch eine derartige Behandlung der Samenertrag deutlich gesteigert werden.

Tabelle 13

| Verbindung Nr. | Aufwandmenge (g Wirkstoff/ha) | Samenertrag (t/ha) | |
|---|---|---|---|
| | | Sertaneja | IAS 5 |
| Kontrolle | 0 | 3.07 | 1.68 |
| 1 | 1 | 3.32 | 1.78 |
| 1 | 5 | 3.22 | 1.81 |

Beispiel 14

Ertragssteigerung bei Limabohnen (Blattbehandlung)

Limabohnen der Sorte Jackson Wonder wurden unter üblichen Feldbedingungen kultiviert und zum Zeitpunkt der Hauptblüte mit einer wäßrigen Aufbereitung der erfindungsgemäßen Substanzen besprüht (350 l/ha).

Wie aus Tabelle 14 hervorgeht, kommt es durch eine derartige Behandlung zu einem deutlichen Mehransatz von Bohnen und somit zu einer Steigerung des gewichtsmäßigen Ertrages.

Die Angaben beziehen sich jeweils auf Versuchsparzellen von 7,5 $m^2$.

Tabelle 14

| Verbindung Nr. | Aufwandmenge (g Wirkstoff/ha) | Anzahl Früchte | Gewicht Früchte (kg) |
|---|---|---|---|
| Kontrolle | 0 | 1128 | 3.86 |
| 1 | 1.0 | 1282 | 4.31 |
| 2 | 1.0 | 1222 | 3.96 |
| 2 | 2.0 | 1365 | 4.44 |

Beispiel 15

Verbesserung des Fruchtansatzes bei Limabohnen (Saatgutbehandlung)

Vor der Aussaat wurden Samen von Limabohnen (Sorte Jackson Wonder) mit einer wäßrigen Aufbereitung der erfindungsgemäßen Substanzen gebeizt. Die Pflanzen wurden in einzelnen Parzellen (6,5 $m^2$) praxisgerecht unter Feldbedingungen kultiviert. Der Fruchtansatz und der Reifegrad der Bohnenfrüchte wurde zum üblichen Erntetermin von 10 willkürich entnommenen Pflanzen bestimmt. Wie der Tabelle 15 zu entnehmen ist, führen die erfindungsgemäßen Substanzen zu einer deutlichen Steigerung es Fruchtansatzes, was auch gewichtsmäßig einen höheren Ertrag erwarten läßt. Der Tabelle ist auch zu entnehmen, daß die Abreife der Früchte unter dem Einfluß der erfindungsgemäßen Verbindungen schneller einsetzt.

Tabelle 15

| Verbindung Nr. | Aufwandmenge (g Wirkstoff/100 kg) | Anzahl Früchte | | |
|---|---|---|---|---|
| | | unreif | reif | total |
| Kontrolle | 0 | 30 | 280 | 310 |
| 1 | 0.01 | 39 | 364 | 403 |
| 1 | 0.10 | 28 | 412 | 440 |
| 2 | 0.01 | 32 | 308 | 340 |
| 3 | 0.10 | 29 | 339 | 368 |
| 3 | 1.00 | 28 | 347 | 375 |
| 3 | 5.00 | 29 | 344 | 373 |

Beispiel 16

Beschleunigung des Feldauflaufs bei Baumwolle und Mais

Samen von Baumwolle (Sorte Stoneville 825) und Mais (Sorte Funk's 4733) wurden mit einer wäßrigen Aufbereitung der erfindungsgemäßen Substanzen gebeizt. Der Auflauf wurde sechs und zehn Tage nach dem Auspflanzen ins Feld bestimmt. Wie der Tabelle 16 zu entnehmen ist, wir der Vorgang des Auflaufens der Saat durch die erfindungsgemäßen Verbindungen beschleunigt. Dies läßt ein insgesamt besseres Wachstum der Pflanzen und damit auch einen gesteigerten Ertrag erwarten.

Tabelle 16

| Verbindung Nr. | Aufwandmenge (g Wirkstoff/100 kg) | % Feldauflauf bei Baumwolle | | % Feldauflauf bei Mais | |
|---|---|---|---|---|---|
| | | 6 Tage nach Auspflanzen | 10 Tage nach Auspflanzen | 6 Tage nach Auspflanzen | 10 Tage nach Auspflanzen |
| Kontrolle | 0 | 50 | 86 | 36 | 99 |
| 1 | 0.1 | 56 | 82 | 48 | 100 |
| 2 | 0.1 | 61 | 86 | 44 | 98 |
| 2 | 1.0 | 62 | 84 | 51 | 98 |

**Patentansprüche**

1. Verwendung von 7-Chlorchinolin-8-carbonsäuren der allgemeinen Formel I

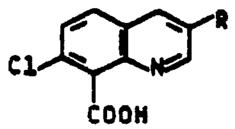

(I)

in der

R für Fluor, Chlor, Brom, $C_1$-$C_4$-Alkyl, $C_1$-$C_4$-Alkoxy oder $C_1$-$C_4$-Halogenalkyl steht,

zur Beeinflussung der Entwicklung von Kulturpflanzen.

2. Verwendung von 7-Chlorchinolin-8-carbonsäuren der Formel I nach Anspruch 1, dadurch gekennzeichnet, daß man bei der Saatgutbehandlung 0,0001 bis 10 g einer 7-Chlorchinolin-8-carbonsäure I pro Kilogramm Saatgut verwendet.

3. Verwendung von 7-Chlorchinolin-8-carbonsäuren der Formel I nach Anspruch 1, dadurch gekennzeichnet, daß man bei der Blatt- und/oder Bodenbehandlung 0,001 bis 500 g einer 7-Chlorchinolin-8-carbonsäure I pro Hektar verwendet.

4. Verwendung von 7-Chlorchinolin-8-carbonsäuren der Formel I nach Anspruch 1, dadurch gekennzeichnet, daß man bei der Tauchbadbehandlung von Stecklingen, Knollen oder Blütenständen 0,01 bis 500 ppm einer 7-Chlorchinolin-8-carbonsäure I verwendet.

5. Verwendung von 7-Chlorchinolin-8-carbonsäuren der Formel I nach Anspruch 1 zur Beeinflussung der Entwicklung von Solanaceen, Rosaceen, Fabaceen und Malvaceen.

6. Verwendung von 7-Chlorchinolin-8-carbonsäuren der Formel I nach Anspruch 1, dadurch gekennzeichnet, daß der Substituent der 7-Chlorchinolin-8-carbonsäure der allgemeinen Formel I

R Fluor, Chlor, Methyl, Ethyl, n-Propyl, Methoxy, Ethoxy oder $C_1$-$C_2$-Fluor-, Chlor- oder Bromalkyl bedeutet.

7. Verwendung von 7-Chlorchinolin-8-carbonsäuren der Formel I nach Anspruch 1, dadurch gekennzeichnet, daß der Substituent der 7-Chlorchinolin-8-carbonsäure der allgemeinen Formel I

R Chlor, Methyl oder Ethyl bedeutet.

8. Verfahren zur Beeinflussung der Entwicklung von Kulturpflanzen, dadurch gekennzeichnet, daß man mindestens eine 7-Chlorchinolin-8-carbonsäure der allgemeinen Formel I

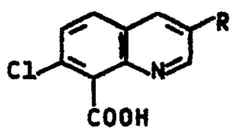

(I),

in der der Substituent

R für Fluor, Chlor, Brom, $C_1$-$C_4$-Alkyl, $C_1$-$C_4$-Alkoxy oder $C_1$-$C_4$-Halogenalkyl steht,

auf die Kulturpflanzen einwirken läßt.

**Claims**

1. Use of a 7-chloroquinoline-8-carboxylic acid of the formula I

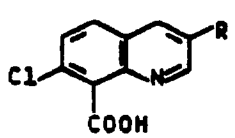

(I)

where R is fluorine, chlorine, bromine, $C_1$–$C_4$-alkyl, $C_1$–$C_4$-alkoxy or $C_1$–$C_4$-haloalkyl, for influencing the development of crops.

2. Use of a 7-chloroquinoline-8-carboxylic acid of the formula I as claimed in claim 1, wherein, for seed treatment, from 0.0001 to 10 g of a 7-chloroquinoline-8-carboxylic acid I are used per kilogram of seed.

3. Use of a 7-chloroquinoline-8-carboxylic acid of the formula I as claimed in claim 1, wherein, for leaf treatment and/or soil treatment, from 0.001 to 500 g of a 7-chloroquinoline-8-carboxylic acid I are used per hectare.

4. Use of a 7-chloroquinoline-8-carboxylic acid of the formula I as claimed in claim 1, wherein, for the treatment of seedlings, tubers or inflorescences in a dip bath, from 0.01 to 500 ppm of a 7-chloroquinoline-8-carboxylic acid I are used.

5. Use of a 7-chloroquinoline-8-carboxylic acid of the formula I as claimed in claim 1 for influencing the development particularly of Solanaceae, Rosaceae, Fabaceae and Malvaceae.

6. Use of a 7-chloroquinoline-8-carboxylic acid of the formula I as claimed in claim 1, wherein the substituent R in a 7-chloroquinoline-8-carboxylic acid of the formula I is fluorine, chlorine, methyl, ethyl, n-propyl, methoxy, ethoxy or $C_1$- or $C_2$-fluoro-, chloro- or bromoalkyl.

7. Use of a 7-chloroquinoline-8-carboxylic acid of the formula I as claimed in claim 1, wherein the substituent R in a 7-chloroquinoline-8-carboxylic acid of the formula I is chlorine, methyl or ethyl.

8. A method for influencing the development of crops, wherein one or more 7-chloroquinoline-8-carboxylic acids of the formula I

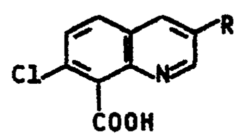

(I),

where R is fluorine, chlorine, bromine, $C_1$–$C_4$-alcyl, $C_1$–$C_4$-alkoxy or $C_1$–$C_4$-haloalkyl, are allowed to act on the crop.

## Revendications

1. Utilisation d'acides 7-chloroquinoléine-8-carboxyliques de formule générale I

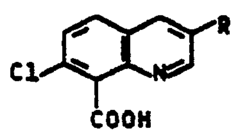

(I)

dans laquelle R est mis pour fluor, chlore, brome, alkyle en $C_1$–$C_4$, alcoxy en $C_1$–$C_4$ ou halogénoalkyle en $C_1$–$C_4$, pour influencer le développement de plantes cultivées.

2. Utilisation d'acides 7-chloroquinoléine-8-carboxyliques de formule I selon la revendication 1, caractérisé par le fait que pour le traitement des semences, on utilise 0,0001 à 10 g d'un acide 7-chloroquinoléine-8-carboxylique par kilogramme de semence.

3. Utilisation d'acides 7-chloroquinoléine-8-carboxyliques de formule I selon la revendication 1, caractérisé par le fait que pour le traitement des feuilles et/ou du sol, on utilise 0,001 à 500 g/ha d'un acide 7-chloroquinoléine-8-carboxylique I.

4. Utilisation d'acides 7-chloroquinoléine-8-carboxyliques de formule I selon la revendication 1, caractérisé par le fait que, lors du traitement par immersion de boutures, bulbes ou inflorescences, on utilise 0,01 à 500 p.p.m. d'un acide 7-chloroquinoléine-8-carboxylique I.

5. Utilisation d'acides 7-chloroquinoléine-8-carboxyliques de formule I selon la revendication 1 pour influencer en particulier le développement de solanacées, rosacées, fabacées et malvacées.

6. Utilisation d'acides 7-chloroquinoléine-8-carboxyliques de formule I selon la revendication 1, caractérisé par le fait que le substituant R de l'acide 7-chloroquinoléine-8-carboxylique de formule générale I, représente fluor, chlore, méthyle, éthyle, n-propyle, méthoxy, éthoxy, ou fluor-, chlor- ou bromalkyle en $C_1$ ou $C_2$.

7. Utilisation d'acides 7-chloroquinoléine-8-carboxyliques de formule I selon la revendication 1, caractérisé par le fait que le substituant R de l'acide 7-chloroquinoléine-8-carboxylique de formule générale I, représente chlore, méthyle ou éthyle.

8. Procédé pour influencer le développement de plantes cultivées, caractérisé par le fait que, l'on fait agir sur les plantes cultivées au moins un acide 7-chloroquinoléine-8-carboxylique de formule générale I

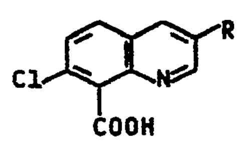

(I),

dans laquelle le substituant R représente fluor, chlore, brome, alkyle en $C_1$–$C_4$, alcoxy en $C_1$–$C_4$ ou halogénoalkyle en $C_1$-$C_4$.